# EUROPEAN PATENT APPLICATION

(11) **EP 4 765 453 A1**
(43) Date of publication of application: **24.06.2026**
(21) Application number: 24908120.9
(22) Date of filing: 19.12.2024
(51) Int. Cl.: H01M 50/538, H01M 50/167, H01M 50/533, H01M 50/566, H01M 50/107, H01M 50/383, H01M 4/70, H01M 50/531, H01M 4/66

(54) **CYLINDRICAL LITHIUM SECONDARY BATTERY**

(30) Priority: 22.12.2023 KR 20230190267; 22.07.2024 KR 20240096753
(71) Applicant: LG Energy Solution, Ltd., Seoul 07335 (KR)
(72) Inventor: SON, Ui Rim, Daejeon 34122 (KR); HAN, Woo Ri, Daejeon 34122 (KR); PARK, Jong Hoon, Daejeon 34122 (KR); WOO, Jae Young, Daejeon 34122 (KR)
(74) Representative: Goddar, Heinz J.
(86) International application number: PCT/KR2024/020718
(87) International publication number: WO 2025/135837

(57) **Abstract**

A cylindrical lithium secondary battery of the present invention includes: an electrode assembly in which a positive electrode, a negative electrode, and a separator interposed between the positive electrode and the negative electrode are wound in one direction; a battery can configured to accommodate the electrode assembly through an opening defined at one side thereof; a cap plate configured to cover the opening; and a current collection plate disposed between the electrode assembly and the cap plate to electrically connect the electrode assembly to the battery can, wherein the current collection plate has tensile strength of 200 N/mm² to 370 N/mm².

## Description

### TECHNICAL FIELD

### [CROSS-REFERENCE TO RELATED APPLICATION]

The present application claims the benefit of the priority of Korean Patent Application Nos. 10-2023-0190267, filed on December 22, 2023, and 10-2024-0096753, filed on July 22, 2024, which are hereby incorporated by reference in their entirety.

### [TECHNICAL FIELD]

The present invention relates to a cylindrical lithium secondary battery.

### BACKGROUND ART

With the recent advancement in electric vehicle technology, as demands for high-capacity batteries increase, development of large-volume and large-sized cylindrical batteries are being required. In the case of small cylindrical batteries that are commonly used in the related art, i.e., cylindrical batteries having form factors of 1865 or 2170, resistance or heat generation do not have a serious effect on battery performance because the capacity is small. However, if a specification of conventional small cylindrical batteries is applied as it is to large cylindrical batteries, serious problems may arise in battery safety.

As the size of the battery increases, the amount of heat and gas generated inside the battery also increases. This heat and gas cause rising of a temperature and pressure inside the battery to cause ignition or explosion of the battery. To prevent this problems, the heat and gas inside the battery have to be properly discharged to the outside, and also, a cross-sectional area of the battery, which serves as a passage for dissipating heat to the outside of the battery, has to increase in proportion to the increase in volume. However, since the increase in cross-sectional area usually does not match the increase in volume, as the battery becomes larger, an amount of heat generated inside the battery may increase to cause problems in which a risk of explosion increases, and an output decreases. In addition, when performing rapid charging at a high voltage, there is a risk of ignition of the battery due to the generation of a lot of heat around electrode tabs in a short period of time.

To prevent such the risks of fire or explosion, safety devices are provided within secondary batteries according to the related art. For example, there is a safety vent that is mainly mounted in a cylindrical secondary battery. According to the related art, when an internal pressure of the secondary battery increases, a path, through which a gas is discharged while a portion of the safety vent is ruptured, may be formed. Thus, the gas within the secondary battery may be discharged to the outside through the path to prevent the risk of the explosion from occurring.

However, even when the safety vent operates, if flame continues without the electrode assembly being ejected to the outside of a can, a problem in which the flame is ejected to the side of the can occurs. When the cylindrical lithium secondary batteries are used in vehicles, a battery pack having a form in which the plurality of cylindrical lithium secondary batteries are coupled may be applied. However, there is a problem in that rupture of a side surface of the battery can causes continuous flame in other surrounding unit cells.

### DISCLOSURE OF THE INVENTION

### TECHNICAL PROBLEM

A cylindrical lithium secondary battery of the present invention may be provided as a cylindrical battery, which has a large volume to implement high capacity and improves a problem of rupture of a side surface of a can when flame occurs to implement high safety.

### TECHNICAL SOLUTION

[1] The present invention provides a cylindrical lithium secondary battery including: an electrode assembly in which a positive electrode, a negative electrode, and a separator interposed between the positive electrode and the negative electrode are wound in one direction; a battery can configured to accommodate the electrode assembly through an opening defined at one side thereof; a cap plate configured to cover the opening; and a current collection plate disposed between the electrode assembly and the cap plate to electrically connect the electrode assembly to the battery can, wherein the current collection plate has tensile strength of 200 N/mm² to 370 N/mm².
[2] The present invention may provide a battery including a beading part that is a support, on which the cap plate is seated, wherein the current collection plate may be connected to the beading part.
[3] In the [1] or [2] of the present invention, the current collection plate may have tensile strength of 230 N/mm² to 350 N/mm².
[4] In any one of the [1] to [3] of the present invention, the current collection plate may have a thickness of 50 *µ*m to 500 *µ*m.
[5] In any one of the [1] to [4] of the present invention, the beading part may have a thickness of 0.4 mm to 0.6 mm.
[6] In any one of the [1] to [5] of the present invention, the current collection plate may be a negative electrode current collection plate.
[7] In the [6] of the present invention, the current collection plate may be a copper thin film.
[8] In any one of the [1] to [7] of the present invention, each of the positive and negative electrodes may include a non-coating portion on which an active material layer is not provided, and at least a portion of the non-coating portion of the positive electrode non-coating portion or the negative electrode non-coating portion may have a tab-less structure that defines an electrode tab.
[9] In the [8] of the present invention, the positive electrode non-coating portion and the negative electrode non-coating portion may be disposed on ends of sides of the positive electrode and the negative electrode along a direction, in which the electrode assembly is wound, respectively, the current collection plate may be coupled to each of the positive electrode non-coating portion and the negative electrode non-coating portion, and the current collection plate may be connected to an electrode terminal.
[10] In the [8] or [9] of the present invention, each of the positive electrode and negative electrode non-coating portions may be processed into a plurality of independently bendable segments, and at least a portion of the plurality of segments may be bent toward a winding center of the electrode assembly.
[11] In the [10] of the present invention, at least some of the plurality of bent segments may overlap each other on upper and lower ends of the electrode assembly, and the current collection plate may be coupled to the plurality of overlapping segments.
[12] In any one of the [1] to [11] of the present invention, the cylindrical lithium secondary battery may have a form factor ratio of 0.4 or more.
[13] In any one of the [1] to [12] of the present invention, the cylindrical lithium secondary battery may be a 46110 cell, a 4875 cell, a 48110 cell, a 4880 cell, a 4680 cell, or a 4695 cell.
[14] The present invention may provide a battery pack including the cylindrical lithium secondary battery of any one of claims [1] to [13].

### ADVANTAGEOUS EFFECTS

The cylindrical lithium secondary battery of the present invention may have the effect in that, even if the secondary battery is exploded to generate the flame, the hole or tears may not occur in the side surface of the cell, and the flame may be induced toward the vent to prevent the flame from being directly transmitted to the peripheral adjacent unit cells.

For this reason, the battery pack including the cylindrical lithium secondary battery of the present invention as the unit cell may have the high safety.

### BRIEF DESCRIPTION OF THE DRAWINGS

The following drawings attached in this specification illustrate a preferred embodiment of the present disclosure and function to make further understood the technical spirit of the present disclosure along with the detailed description of the present disclosure. The present disclosure should not be construed as being limited to only the drawings.
FIG. 1 is a perspective view of a cylindrical lithium secondary battery according to an embodiment of the present invention.
FIG. 2 is a cutaway cross-sectional view of the cylindrical lithium secondary battery according to an embodiment of the present invention.
FIG. 3 is an enlarged cross-sectional view of a first current collection plate and its surroundings illustrated in FIG. 2.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

Hereinafter, the present invention will be described in more detail.

A cylindrical lithium secondary battery and/or a battery pack according to the present invention may include at least one of configurations disclosed below and may include any combination of technically possible configurations of the configurations below.

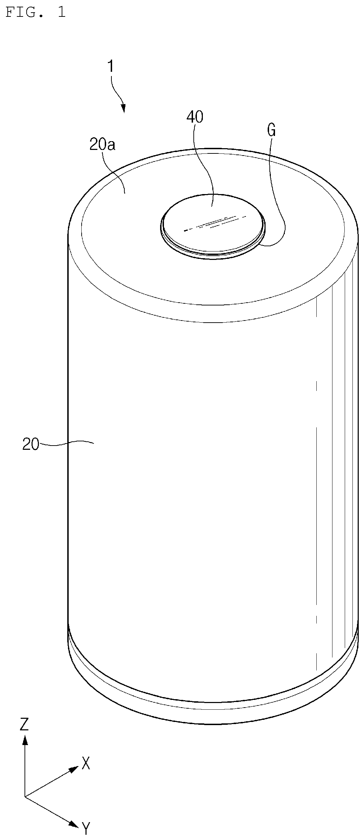

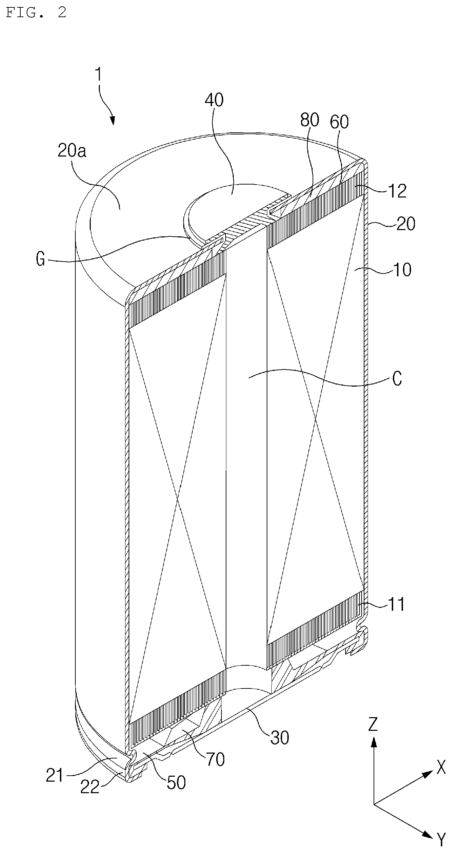

FIG. 1 is a perspective view of a cylindrical lithium secondary battery according to an embodiment of the present invention, and FIG. 2 is a cutaway cross-sectional view of the cylindrical lithium secondary battery according to an embodiment of the present invention.

A cylindrical lithium secondary battery 1 (hereinafter, referred to as a "secondary battery") according to an embodiment of the present invention may include an electrode assembly 10 and a battery can 20 that accommodates the electrode assembly 10.

The electrode assembly 10 may include a positive electrode, a negative electrode, and a separator interposed between the positive electrode and the negative electrode. In addition, the electrode assembly 10 may be provided with a first electrode tab 11 connected to one of the positive and negative electrodes, and a second electrode tab 12 connected to the other of the positive and negative electrodes.

In more detail, the electrode assembly 10 may be provided in a jelly-roll type. The electrode assembly 10 may be manufactured by winding a stack in which the positive electrode, the separator, the negative electrode, and the separator are sequentially stacked. A hollow C that is elongated in a height direction may be formed at a central portion of the electrode assembly 10. To insulate the electrode assembly 10 from an inner circumference of the battery can 20, the separator may be disposed at the outermost side of the electrode assembly 10.

The first electrode tab 11 and the second electrode tab 12 may be provided on both ends in the height direction of the electrode assembly 10, respectively. In more detail, one non-coating portion of the positive electrode and the negative electrode may be disposed on one end of the electrode assembly 10 to serve as the first electrode tab 11. The other non-coating portion of the positive electrode and the negative electrode may be disposed on the other end of the electrode assembly 10 to serve as the second electrode tab 12.

Each of the electrode tabs 11 and 12 may extend along the winding direction of the electrode assembly 10.

Alternatively, each of the electrode tabs 11 and 12 may include a plurality of foil flags disposed along the winding direction of the electrode assembly 10.

A first current collection plate 50, which will be described later, may be coupled to the first electrode tab 11, and a second current collection plate 60, which will be described later, may be coupled to the second electrode tab 12. The electrode assembly 10 may be accommodated in a battery can 20 in the state in which the current collection plates 50 and 60 are coupled to the electrode tabs 11 and 12, respectively.

For example, the first electrode tab 11 may be a non-coating portion of the negative electrode, and the second electrode tab 12 may be a non-coating portion of the positive electrode. In this case, the first current collection plate 50 may be named as a negative electrode current collection plate, and the second current collection plate 60 may be named as a positive electrode current collection plate. This may be an example of a tab-less structure, which will be described later.

The battery can 20 may have an approximately cylindrical shape. One surface 20a may be provided at one side in the height direction of the battery can 20, and an opening may be formed at the other side.

The electrode assembly 10 may be accommodated in the battery can 20 together with an electrolyte through the opening.

The battery can 20 may have a conductive material such as a metal. The battery can 20 may be electrically connected to the first electrode tab 11 through the first current collection plate 50 to be described later. The battery can 20 may have the same polarity as the first electrode tab 11.

A beading part 21 and a crimping part 22 may be provided in the battery can 20. The beading part 21 and the crimping part 22 may be provided to be adjacent to the opening of the battery can 20.

The beading part 21 may be provided by pressing a circumference of the battery can 20 inward in a radius direction. An inner diameter of the beading part 21 may be less than an inner diameter of the battery can 20.

The beading part 21 may be provided in the state in which the electrode assembly 10 is accommodated in the battery can 20. The electrode assembly 10 may be restricted between the one surface 20a of the battery can 20 and the beading part 21 in the height direction of the battery can 20. The beading part 21 may prevent the electrode assembly 10 from being separated from the opening of the battery can 20. In addition, the beading part 21 may be coupled to the first current collection plate 50. For example, the first current collection plate 50 may be welded to the beading part 21. As a result, the first current collection plate 50 may electrically connect the first electrode tab 11 to the battery can 20.

The crimping part 22 may be disposed adjacent to the beading part 21. The crimping part 22 may be provided by bending an end of a circumferential surface of the battery can 20 inward in the radius direction. The crimping part 22 may be provided after the first current collection plate 50 is coupled to the beading part 21. The crimping part 22 may restrict a cap plate 30 to be described later together with the beading part 21.

The secondary battery 1 may include the cap plate 30 that covers the opening of the battery can 20.

The cap plate 30 may have an approximately circular plate shape. The cap plate 30 may define an outer appearance of the secondary battery 1 together with the battery can 20. An edge of the cap plate 30 may be restricted between the beading part 21 and the crimping part 22 of the battery can 20.

The cap plate 30 may have a material having high rigidity such as a metal. The cap plate 30 may be insulated from the battery can 20 and may not have polarity. In more detail, a sealing part 72 of a spacer 70 to be described later may be interposed between the cap plate 30 and the battery can 20. This will be described in detail later.

The secondary battery 1 may include a terminal 40 fixed through the one surface 20a of the battery can 20.

The terminal 40 may pass through the one surface 20a of the battery can 20, more specifically, a central portion of the one surface 20a. A portion of the terminal 40 may be exposed to the outside of the battery can 20, and the other portion may be disposed inside the battery can 20. For example, the terminal 40 may be fixed to the one surface 20a of the battery can 20 by riveting.

The terminal 40 may have a conductive material such as a metal.

The terminal 40 may be coupled to the second current collection plate 60 to be described later. For example, the second current collection plate 60 may be welded to the terminal 40. As a result, the second current collection plate 60 may electrically connect the second electrode tab 12 to the terminal 40.

The terminal 40 may be insulated from the battery can 20. In more detail, an insulating gasket G may be interposed between the terminal 40 and the battery can 20. However, it is not limited thereto, and a method for forming an insulating coating layer on a portion of the terminal 40 or structurally fixing the terminal 40 while separating the terminal 40 and the battery can 20 from each other may be applied.

The insulating gasket G may be deformed during the riveting of the terminal 40 and bent toward an inner surface of the one surface 20a of the battery can 20. The insulating gasket G may seal a gap between the terminal 40 and the battery can 20.

The battery can 20 and the terminal 40 may have opposite polarities by the insulating gasket G. In more detail, the battery can 20 may have the same polarity as the first electrode tab 11, and the terminal 40 may have the same polarity as the second electrode tab 12. Thus, the one side 2a of the battery can 20 may function as a first terminal having a first polarity, and the terminal 40 may function as a second terminal having a second polarity. Since the one side 2a of the battery can 20 and the terminal 40 are disposed adjacent to each other, an inner space required for installing a busbar in a battery module including a plurality of secondary batteries 1 may be reduced, and an energy density of the battery module may increase.

The secondary battery 1 may include a first current collection plate 50 that electrically connects the first electrode tab 11 to the battery can 20. For example, the first electrode tab 11 may be connected to the negative electrode of the electrode assembly 10, and the first current collection plate 50 may be named a negative current collection plate.

The secondary battery 1 may include a second current collection plate 60 that electrically connects the second electrode tab 11 to the terminal 40. For example, the second electrode tab 12 may be connected to the positive electrode of the electrode assembly 10, and the second current collection plate 60 may be named a positive current collection plate.

The first current collection plate 50 and the second current collection plate 60 may be disposed within the battery can 20.

The first current collection plate 50 may be disposed between the electrode assembly 10 and the cap plate 30 in the height direction of the battery can 20. The first current collection plate 50 may be coupled to the first electrode tab 11. In more detail, the first current collection plate 50 may be welded to the first electrode tab 11. In addition, the first current collection plate 50 may be welded to the battery can 20, more specifically, to the beading part 21.

The second current collection plate 60 may be disposed between the electrode assembly 10 and the one surface 20a of the battery can 20 in the height direction of the battery can 20. The second current collection plate 60 may be coupled to the second electrode tab 12. In more detail, the second current collection plate 60 may be welded to the second electrode tab 12. In addition, the second current collection plate 60 may be welded to the terminal 40.

The secondary battery 1 may include a spacer 70 disposed between the cap plate 30 and the electrode assembly 10. In more detail, the spacer 70 may be disposed between the cap plate 30 and the first current collection plate 50.

A height of the spacer 70 may correspond to a distance between the cap plate 30 and the electrode assembly 10. The spacer 70 may prevent the electrode assembly 10 from moving or shaking within the battery can 20.

The secondary battery 1 may include an insulator 80 disposed between the electrode assembly 10 and the battery can 20. In more detail, the insulator 80 may be disposed between the second current collection plate 60 and the battery can 20.

The insulator 80 may insulate the second current collection plate 60 and the electrode assembly 10 from the battery can 20. The insulator 80 may have a resin material having insulating properties.

A hole through which the terminal 40 passes may be defined in a central portion of the insulator 80. The terminal 40 may be coupled to the second current collection plate 60 through the hole.

The insulator 80 may have an approximately cap shape. In this case, a portion of the insulator 80 may be disposed between one surface 20a of the battery can 20 and the second current collection plate 60, and the other portion may be disposed between an outer circumference of the second current collection plate 60 and an inner circumference of the battery can 20.

However, it is not limited thereto, and it is also possible for the insulator 80 to have a plate shape disposed between the one surface 20a of the battery can 20 and the second current collection plate 60. In this case, an insulating tape separate from the insulator 80 may be interposed between the outer circumference of the second current collection plate 60 and the inner circumference of the battery can 20.

A height of the insulator 80 may correspond to a vertical distance between the one surface 20a of the battery can 20 and the electrode assembly 10. The insulator 80 together with the spacer 70 may prevent the electrode assembly 10 from moving or shaking within the battery can 20.

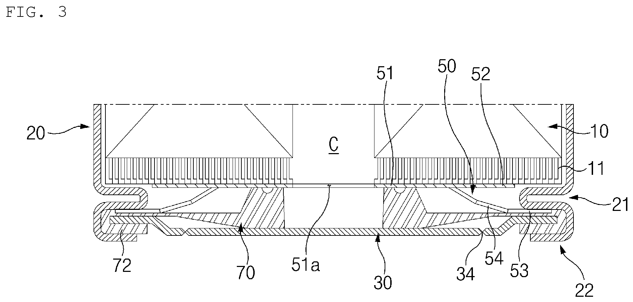

FIG. 3 is an enlarged cross-sectional view of the first current collection plate and its surroundings illustrated in FIG. 2.

As described above, the first current collection plate 50 may be coupled to the first electrode tab 11. In more detail, at least a portion of the first electrode tab 11 may be bent toward the hollow C of the electrode assembly 10, and the first current collection plate 50 may be coupled to the bent portion of the first electrode tab 11. Although not shown in FIG. 3, the bent portions of the plurality of first electrode tabs 11 adjacent to each other may overlap each other.

As a result, a height of the first electrode tab 11 may be reduced to improve the energy density of the secondary battery 1. In addition, since the coupled area between the first electrode tab 11 and the first current collection plate 50 increases, coupling force between the first electrode tab 11 and the first current collection plate 50 may be improved, and resistance may be reduced.

In more detail, the first current collection plate 50 may include a center part 51, a tab coupling part 52 extending outward from the center part 51 and coupled to the first electrode tab 11, a can coupling part 53 coupled to the battery can 20 and spaced apart from the tab coupling part 52, and a bridge 54 connecting the can coupling part 53 to the center part 51.

The center part 51 may be disposed at a central portion of one side (e.g., a lower side) of the electrode assembly 10. The center part 51 may have an approximately circular shape.

A center hole 51a may be defined in the center part 51. The center hole 51a may face the hollow C of the electrode assembly 10. The center hole 51a together with the hollow C may function as a passage for insertion of a welding rod or laser irradiation to couple the terminal 40 to the second current collection plate 60. In addition, the center hole 51a may function as a passage to enable smooth electrolyte impregnation into the inside of the electrode assembly 10 when the electrolyte is injected.

The tab coupling part 52 may extend radially outward from the center part 51. The tab coupling part 52 may be coupled to the first electrode tab 11. The plurality of tab coupling parts 52 may be provided, and the plurality of tab coupling parts 52 may extend radially from the center part 51.

A width of the tab coupling part 52 may become wider as it gets further away from the center part 51. Thus, the tab coupling part 52 may widely cover the bent portion of the first electrode tab 11 and prevent the bent portion of the first electrode tab 11 from being lifted.

The tab coupling part 52 may non-overlap the beading part 21 in a height direction of the battery can 20. That is, the tab coupling part 52 may not be disposed between the electrode assembly 10 and the beading part 21. As a result, the tab coupling part 52 may be prevented from being damaged by being caught between the electrode assembly 10 and the beading part 21 due to a sizing process. The sizing may mean a compression process of reducing the height of the beading part 21 to reduce the height of the secondary battery 1 after the beading part 21 and crimping part 22 are formed in the battery can 20 in which the electrode assembly 10 is accommodated.

The can coupling part 53 may be coupled to the battery can 20, more specifically, to the beading part 21. The can coupling part 53 may be coupled to a surface on the beading part 21 that is relatively far from the electrode assembly 10.

The can coupling part 53 may have a predetermined height difference with respect to the center part 51 and the tab coupling part 52. The height difference may mean a distance between the tab coupling part 52 and the can coupling part 53 in the height direction of the battery can 20. The height difference may correspond to the height of the beading part 21. That is, the distance between the tab coupling part 52 and the can coupling part 53 in the height direction of the battery can 20 may be equal to or similar to the height of the beading part 21.

The can coupling part 53 may be pressed by the sealing part 72 to be described later. In more detail, the can coupling part 53 may be interposed and fixed between the sealing part 72 and the beading part 21.

The can coupling part 53 may be spaced apart from the tab coupling part 52. In more detail, each of the can coupling part 53 and the tab coupling part 52 may be connected to the center part 51, and the can coupling part 53 and the tab coupling part 52 may not be directly connected to each other. Thus, when an impact or vibration is applied to the secondary battery 1, stress acting on the coupled portion between the tab coupling part 52 and the first electrode tab 11 and the coupled portion between the can coupling part 53 and the battery can 20 may be dispersed to minimize possibility of damage to the first current collection plate 50.

The can coupling part 53 may be provided in plurality. The can coupling part 53 and the tab coupling part 52 may be arranged alternately in a circumferential direction of the first current collection plate 50.

The can coupling part 53 may extend along an inner circumference of the battery can 20. That is, the can coupling part 53 may extend in the circumferential direction of the beading part 21. Thus, since a contact area between the can coupling part 53 and the beading part 21 increases, the coupling between the can coupling part 53 and the beading part 21 may be stably formed, and the resistance between the can coupling part 53 and the beading part 21 may be reduced.

Edges at both sides of the can coupling part 53 may be disposed along a radial direction of the first current collection plate 50. A virtual line extending along both the edges may pass through the center of the first current collection plate 50.

The can coupling part 53 and the tab coupling part 52 may non-overlap each other in the height direction of the battery can 20. Thus, when stacking the plurality of first current collection plates 50 that is in a state of being coupled to the electrode assembly 10, it is possible to prevent the can coupling part 53 of one first current collection plate 50 and the tab coupling part 52 of the other first current collection plate 50 from interfering with each other.

The coupling strength between the can coupling part 53 and the battery can 20, more specifically, the can coupling part 53 and the beading part 21 may be greater than that between the tab coupling part 52 and the first electrode tab 11. As a result, the can coupling part 53 may be stably coupled to the battery can 20 that is rigid.

The bridge 54 may connect the can coupling part 53 to the center part 51. The bridge 54 may extend radially outward from the center part 51 and may be spaced apart from the tab coupling part 52 in the circumferential direction of the first current collection plate 50.

The plurality of bridges 54 may be provided, like the can coupling part 53, and the plurality of bridges 54 may extend radially from the center part 51. The bridge 54 and the tab coupling part 52 may be disposed alternately in the circumferential direction of the first current collection plate 50.

Since there is a height difference between the center part 51 and the can coupling part 53, the bridge 54 may be formed to be inclined. The bridge 54 may extend in an inclined direction away from the electrode assembly 10 as it moves away from the center part 51.

The inclination of the bridge 54 may become gentler as it moves away from the center part 51. In more detail, the bridge 54 may include a first inclined portion 54a extending from the center part 51 and a second inclined portion 54b extending from the first inclined portion 54a and having a gentler inclination than the first inclined portion 54a.

However, it is not limited thereto, and the bridge 54 may be formed to be rounded in a direction that becomes gentler as it gets further away from the center part 51.

As a result, the bridge 54 may be prevented from being excessively deformed due to the sizing process, and the center part 51 and the first electrode tab 11 coupled to the center part 51 may be prevented from being lifted. During the sizing process, the beading part 21 may be compressed toward the electrode assembly 10, and its height may be reduced, and thus, the tab coupling part 53 that is connected to the beading part 21 may also move toward the electrode assembly 10. As a result, repulsive force may be applied to the center part 51 connected to the tab coupling part 53 and the bridge 54 in a direction away from the electrode assembly 10. If the inclination of the bridge 54 is constant or becomes sharper as it gets further away from the center part 51, the repulsive force may be greatly applied to the center part 51, and as a result, there is a risk that the center part 51 and the first electrode tab 11 coupled thereto are lifted. On the other hand, the bridge 54 according to the present embodiment may minimize the lifting phenomenon of the center part 51 and the first electrode tab 11, which is caused by the sizing process.

In addition, the process of pressing the outer circumference of the battery can 20 inward to form the beading part 21 may be performed in a state in which the electrode assembly 10 to which the first current collection plate 50 is coupled is accommodated within the battery can 20. In this process, since the bridge 54 has a gentle inclination as it moves away from the center part 51, the beading part 21 may be easily formed without an interference with the bridge 54.

An edge of the cap plate 30 may be disposed between the beading part 21 and the crimping part 22 of the battery can 20 and may be fixed by the sealing part 72 to be described later.

The cap plate 30 may not protrude relative to the battery can 20. For example, when the cap plate 30 is disposed on the lower end of the battery can 20, a bottom surface of a plate part 31 of the cap plate 30 may be disposed on the same plane as the bottom surface of the battery can 20 or to be higher. Thus, the cap plate 30 may be prevented from being pressed upward by the bottom surface supporting the battery can 20, and a phenomenon in which a pressure required for rupture of a venting part 34 is different from a design value due to a weight of the secondary battery 1 may be prevented.

The venting part 34 may be provided in the cap plate 30. The venting part 34 may be provided to have a thinner thickness than the surrounding area. Thus, the venting part 34 may be structurally weaker compared to the surrounding area, and if the internal pressure of the battery can 20 increases beyond the preset value, the venting part 34 may be preferentially broken.

The venting part 34 may be provided along the circumferential direction of the cap plate 30. For example, the venting part 34 may form a closed loop shape such as a ring. Thus, when the venting part 34 is broken, an area of the cap plate 30 disposed inside the venting part 34 may be easily separated to define an opening, and a gas inside the battery can 20 may be quickly discharged.

The venting part 34 may be provided by notching each of both sides of the cap plate 30 to a predetermined depth to partially reduce a thickness of the cap plate 30. However, it is not limited thereto, and it may also be possible to form the venting part 34 by notching only one surface of the cap plate 30.

The spacer 70 may have an elastic material to effectively absorb an impact or vibration applied to the secondary battery 1.

A height of the spacer 70 may correspond to a distance between the first current collection plate 50 and the cap plate 30. In this case, the main body 71 may effectively prevent the electrode assembly 10 from moving within the battery can 20 due to a clearance defined between the first current collection plate 50 and the cap plate 30. Thus, the spacer 70 may prevent damage from occurring at the coupled portion between the electrode assembly 10 and the first current collection plate 50 and/or the coupled portion between the first current collection plate 50 and the battery can 20.

In the spacer 70, an opening may be defined to face the hollow C of the electrode assembly 10 through the center hole 51a of the first current collection plate 50. The opening together with the center hole 51a and the hollow C may function as a passage for inserting a welding rod or a passage for laser irradiation. In addition, the opening may function as a passage to allow smooth electrolyte impregnation into the inside of the electrode assembly 10.

The sealing part 72 may be provided to be integrated with the spacer 70. However, this embodiment is not limited thereto.

The sealing part 72 may have a circular ring shape extending along the inner circumference of the battery can 20. The sealing part 72 may be fixed between the beading part 21 and the crimping part 22 of the battery can 20. A portion of the sealing part 72 may be bent together with the crimping part 22 to surround the edge of the cap plate 30. Thus, the sealing part 72 may firmly seal a space between the cap plate 30 and the battery can 20. As a result, the sealing part 72 may function as a gasket for improving the fixing force of the cap plate 30 and the sealing force of the battery can 20.

The sealing part 72 may press the can coupling part 53 of the first current collection plate 50 toward the beading part 21 to further strengthen the coupling between the can coupling part 53 and the beading part 21. In addition, the sealing part 72 may insulate the can coupling part 53 and the cap plate 30 from each other.

Tensile strength of a current collector included in the lithium secondary battery of the present invention may be 200 N/mm² to 370 N/mm², preferably 230 N/mm² to 350 N/mm², and most preferably 250 N/mm² to 330 N/mm². If the current collection plate included in the lithium secondary battery of the present invention has tensile strength within the above-described range, when flame occurs in the lithium secondary battery, the flame may not be directed to the side surface, but may be directed upward the battery, thereby preventing the flame from being spread to the surrounding lithium secondary battery. In addition, if the current collection plate included in the lithium secondary battery of the present invention has the tensile strength within the above-described range, the current collection plate may be prevented from being excessively stretched or broken when the lithium secondary battery actually operates.

The tensile strength was measured using an extensometer (Manufacturer: Nanotech, Product Name: Universal Testing Machine (UTM)).

The tensile strength of the current collection plate may be affected by various factors, such as a method for thermally treating the current collection plate, a processing method such as a rolling method, and whether plating is performed.

The current collection plate may have a thickness of 50 *µ*m to 500 *µ*m, preferably 100 *µ*m to 400 *µ*m, and more preferably 150 *µ*m to 350 *µ*m. If the thickness of the current collection plate satisfies the above-described range, when flame occurs in the lithium secondary battery, the flame may not be directed to the side surface, but may be directed upward the battery, thereby preventing the flame from being spread to the surrounding lithium secondary battery. In addition, when the current collection plate included in the lithium secondary battery of the present invention has a thickness within the above-described range, the current collection plate may have a resistance level that is capable of providing appropriate cell performance and have less physical deformation when the cell operates.

The beading part may have a thickness of 0.4 mm to 0.6 mm, preferably 0.4 mm to 0.5 mm. If the thickness of the beading part satisfies the above-described range, when flame occurs in the lithium secondary battery, the flame may not be directed to the side surface, but may be directed upward the battery, thereby preventing the flame from being spread to the surrounding lithium secondary battery.

The current collection plate may be a copper film, a nickel-plated copper film, or the like, and may have an elongation of 2% to 50% at a temperature of 25°C, preferably 5% to 30%, and more preferably 5% to 20%. The elongation may be measured using an extensometer (Manufacturer: Nanotech, Product Name: Universal Material Testing Machine (UTM)).

Specifically, the electrode assembly of the present invention may have a structure in which the positive electrode, the negative electrode, and the separator interposed between the positive electrode and the negative electrode are wound in one direction and may be, for example, a jelly-roll type electrode assembly. The electrode assembly of the present invention may be manufactured by winding a stack provided by sequentially stacking the separator, the positive electrode, the separator, and the negative electrode at least once in one direction.

Here, each of the positive and negative electrodes may have a structure, in which an active material layer is disposed on the sheet-shaped current collector, and may include a non-coating portion on which the active material layer is not provided on some area of the current collector.

When the positive and negative electrodes including the non-coating portions are used as described above, it is possible to implement a battery having a tab-less structure in which at least a portion of the non-coating portion of each of the positive and negative electrodes defines the electrode tabs without providing separate electrode tabs.

Specifically, the non-coating portion may be disposed to be elongated along the winding direction at one end of the current collector, and the current collection plate may be coupled to each of the positive non-coating portion and the negative non-coating portion, and then, the current collection plate may be connected to the electrode terminal to implement the battery having the tab-less structure.

For example, the battery having the tab-less structure may be manufactured by the following method. First, the separator, the positive electrode, the separator, and the negative electrode may be sequentially stacked so that the non-coating portions of the positive electrode and negative electrode are disposed in opposite directions and then be wound in one direction to manufacture the electrode assembly. Then, the non-coating portions of the positive and negative electrodes may be bent toward a winding center, i.e., in the direction of the hollow C and then may weld and couple the current collection plates to the non-coating portions of the positive electrode and the non-coating portion of the negative electrode to connect the current collection plates to the electrode terminal, thereby manufacturing the battery having the tab-less structure. Since the current collection plate has a large cross-sectional area compared to a strip-type electrode tab, and resistance is inversely proportional to the cross-sectional area of a passage through which current flows, when the secondary battery is formed with the above-mentioned structure, the cell resistance may be significantly reduced.

The positive and negative electrode non-coating portions may be processed into a plurality of independently bendable segments, and at least a portion of the plurality of segments may be bent toward the hollow C, which is the winding center of the electrode assembly.

The segments may be formed by processing the positive and negative current collectors through a metal foil cutting process such as laser notching, ultrasonic cutting, or punching.

When the non-coating portions of the positive and negative electrodes are processed in the form of the plurality of segments, stress applied to the non-coating portions during the bending may be reduced to preventing deformation or damage to the non-coating portions and improve welding properties with the current collection plate.

The current collection plate and the non-coating portion may be generally bonded by welding. In order to improve the welding properties, a strong pressure has to be applied to a welding area of the non-coating portion to bend the non-coating portion as flat as possible. However, during this bending process, a shape of the non-coating portion may become distorted and deformed, and the deformed portion may be in contact with the electrode having an opposite polarity to cause an internal short circuit or fine cracks in the non-coating portion. However, if the non-coating portions of the positive and negative electrodes are processed into the plurality of independently bendable segments, the stress applied to the non-coating portion during the bending may be alleviated to minimize the deformation and damage to the non-coating portion.

In addition, when the non-coating portion is processed in the form of the segments as described above, the plurality of segments may overlap each other during the bending to increase in welding strength with the current collection plate, and when using the latest technology such as the laser welding, it is possible to prevent a problem in which the laser is permeated into the electrode assembly to melt the separator or the active material. Preferably, at least some of the plurality of bent segments may overlap each other on the upper and lower ends of the electrode assembly, and the current collection plate may be coupled on the plurality of overlapping segments.

### Cylindrical lithium secondary battery

Next, the cylindrical lithium secondary battery according to the present invention will be described. The cylindrical lithium secondary battery according to the present invention may be a large-capacity cylindrical secondary battery having a rated capacity of 25 Ah or more.

The cylindrical lithium secondary battery according to the present invention may be a large cylindrical battery having a form factor ratio (defined as a ratio of a diameter Φ to a height H of the cylindrical battery) of 0.4 or more. Here, the form factor may refer to a value representing the diameter and height of the cylindrical battery.

The cylindrical battery according to the present invention may be, for example, a 46110 cell (diameter of 46 mm, height of 110 mm, and form factor ratio of 0.418), a 4875 cell (diameter of 48 mm, height of 75 mm, and form factor ratio of 0.640), a 48110 cell (diameter of 48 mm, height of 110 mm, and form factor ratio of 0.436), a 4880 cell (diameter of 48 mm, height of 80 mm, and form factor ratio of 0.600), a 4680 cell (diameter of 46 mm, height of 80 mm, and form factor ratio of 0.575), a 4695 cell (diameter of 46 mm, height of 95 mm, and form factor ratio of 0.484). In the numerical value representing the form factor, first two numbers may represent the diameter of the cell, and next two or three numbers may represent the height of the cell.

The cylindrical lithium secondary battery according to the present invention may significantly reduce an amount of gas generated compared to conventional batteries and thus may realize excellent safety even in large cylindrical batteries having a form factor ratio of 0.4 or more.

The cylindrical battery according to the present invention may be the battery having the tab-less structure that does not include the electrode tabs.

The battery having the tab-less structure may have, for example, a structure in which each of the positive and negative electrodes includes the non-coating portion on which the active material layer is not formed, the positive electrode non-coating portion and the negative electrode non-coating portion are respectively disposed on the upper and lower ends of the electrode assembly, the current collection plate is coupled to each of the positive electrode non-coating portion and the negative electrode non-coating portion, and the current collection plate is connected to the electrode terminal.

The cylindrical lithium secondary battery may be applied to various devices. For example, it may be applied to electric vehicles such as electric bicycles, electric vehicles, and hybrid electric vehicles (HEVs).

Thus, according to another embodiment of the present invention, the battery module including the cylindrical lithium secondary battery as a unit cell and a battery pack including the battery module are provided.

The battery module or the battery pack may be used as a power source of at least one medium and large device of a power tool; a vehicle including an electric vehicle (EV), a hybrid electric vehicle (HEV), and a plug-in hybrid electric vehicle (PHEV); and a system for storing power.

Hereinafter, the present invention will be described in more detail through specific embodiments.

### Embodiments

### Embodiment 1

A jelly-roll type electrode assembly was manufactured by interposing a separator between positive and negative electrodes and stacking and winding the separator and the positive and negative electrodes in the order of separator/positive electrode/separator/negative electrode. After inserting the electrode assembly into a cylindrical battery can, an electrolyte was injected, and an opening of the battery can was sealed with a cap plate.

A copper plate having a thickness of 200 *µ*m was used as a negative electrode plate, and the cap plate and the electrode assembly were welded to each other to electrically connect the cap plate to the electrode assembly. Tensile strength of the negative electrode plate was 275 N/mm², and an elongation at a temperature of 25°C was 20.0%.

### Embodiment 2

A jelly-roll type electrode assembly was manufactured by interposing a separator between positive and negative electrodes and stacking and winding the separator and the positive and negative electrodes in the order of separator/positive electrode/separator/negative electrode. After inserting the electrode assembly into a cylindrical battery can, an electrolyte was injected, and an opening of the battery can was sealed with a cap plate.

A copper plate having a thickness of 200 *µ*m was used as a negative electrode plate, and the cap plate and the electrode assembly were welded to each other to electrically connect the cap plate to the electrode assembly. Tensile strength of the negative electrode plate was 325 N/mm², and an elongation at a temperature of 25°C was 6.5%.

### Embodiment 3

A jelly-roll type electrode assembly was manufactured by interposing a separator between positive and negative electrodes and stacking and winding the separator and the positive and negative electrodes in the order of separator/positive electrode/separator/negative electrode. After inserting the electrode assembly into a cylindrical battery can, an electrolyte was injected, and an opening of the battery can was sealed with a cap plate.

A copper plate having a thickness of 300 *µ*m was used as a negative electrode plate, and the cap plate and the electrode assembly were welded to each other to electrically connect the cap plate to the electrode assembly. Tensile strength of the negative electrode plate was 238 N/mm², and an elongation at a temperature of 25°C was 46.0%.

### Comparative Example 1

A jelly-roll type electrode assembly was manufactured by interposing a separator between positive and negative electrodes and stacking and winding the separator and the positive and negative electrodes in the order of separator/positive electrode/separator/negative electrode. After inserting the electrode assembly into a cylindrical battery can, an electrolyte was injected, and an opening of the battery can was sealed with a cap plate.

A copper plate having a thickness of 200 *µ*m was used as a negative electrode plate, and the cap plate and the electrode assembly were welded to each other to electrically connect the cap plate to the electrode assembly. Tensile strength of the negative electrode plate was 175 N/mm², and an elongation at a temperature of 25°C was 42.5%.

### Comparative Example 2

A jelly-roll type electrode assembly was manufactured by interposing a separator between positive and negative electrodes and stacking and winding the separator and the positive and negative electrodes in the order of separator/positive electrode/separator/negative electrode. After inserting the electrode assembly into a cylindrical battery can, an electrolyte was injected, and an opening of the battery can was sealed with a cap plate.

A copper plate having a thickness of 300 *µ*m was used as a negative electrode plate, and the cap plate and the electrode assembly were welded to each other to electrically connect the cap plate to the electrode assembly. Tensile strength of the negative electrode plate was 380 N/mm², and an elongation at a temperature of 25°C was 3.5%.

### Experimental Example

An overcharge experiment was performed using the lithium secondary batteries of Embodiments 1 to 3 and Comparative Examples 1 and 2. Specifically, the lithium ion battery was charged at 1/3C with a 1/50 C cut off to the full charge voltage (4.2 V), and then rested for 2 hours to stabilize the voltage. After overcharging identically manufactured five lithium secondary batteries with current of 40 A, the number of lithium secondary batteries in which the negative electrode current collection plate was lost was counted, and the results are shown in Table 1 below.

**[Table 1]**

| | Number of lithium secondary batteries with lost negative electrode current collection plates |
|---|---|
| Embodiment 1 | 5/5ea |
| Embodiment 2 | 5/5ea |
| Embodiment 3 | 5/5ea |
| Comparative Example 1 | 2/5ea |
| Comparative Example 2 | 4/5ea |

### [Description of the Symbols]

- 1:: Cylindrical lithium secondary battery
- 10:: Electrode assembly
- 11:: First electrode tab
- 12:: Second electrode tab
- 20:: Battery can
- 21:: Beading part
- 22:: Crimping part
- 30:: Cap plate
- 34:: Bending part
- 40:: Terminal
- 50:: First current collection plate
- 51:: Center part
- 51a:: Center hole
- 52:: Tab coupling part
- 53:: Can coupling part
- 54:: Bridge
- 60:: Second current collection plate
- 70:: Spacer
- 72:: Sealing part

## Claims

1. A cylindrical lithium secondary battery comprising:
an electrode assembly in which a positive electrode, a negative electrode, and a separator interposed between the positive electrode and the negative electrode are wound in one direction;
a battery can configured to accommodate the electrode assembly through an opening defined at one side thereof;
a cap plate configured to cover the opening; and
a current collection plate disposed between the electrode assembly and the cap plate to electrically connect the electrode assembly to the battery can,
wherein the current collection plate has tensile strength of 200 N/mm² to 370 N/mm².

2. The cylindrical lithium secondary battery of claim 1, wherein the battery can comprises a beading part that is a support, on which the cap plate is seated,
wherein the current collection plate is connected to the beading part.

3. The cylindrical lithium secondary battery of claim 1, wherein the current collection plate has tensile strength of 230 N/mm² to 350 N/mm².

4. The cylindrical lithium secondary battery of claim 1, wherein the current collection plate has a thickness of 50 *µ*m to 500 *µ*m.

5. The cylindrical lithium secondary battery of claim 2, wherein the beading part has a thickness of 0.4 mm to 0.6 mm.

6. The cylindrical lithium secondary battery of claim 1, wherein the current collection plate is a negative electrode current collection plate.

7. The cylindrical lithium secondary battery of claim 6, wherein the current collection plate is a copper thin film.

8. The cylindrical lithium secondary battery of claim 1, wherein each of the positive and negative electrodes comprises a non-coating portion on which an active material layer is not provided, and
at least a portion of the non-coating portion of the positive electrode non-coating portion or the negative electrode non-coating portion has a tab-less structure that defines an electrode tab.

9. The cylindrical lithium secondary battery of claim 8, wherein the positive electrode non-coating portion and the negative electrode non-coating portion are disposed on ends of sides of the positive electrode and the negative electrode along a direction, in which the electrode assembly is wound, respectively,
the current collection plate is coupled to each of the positive electrode non-coating portion and the negative electrode non-coating portion, and
the current collection plate is connected to an electrode terminal.

10. The cylindrical lithium secondary battery of claim 8, wherein each of the positive electrode and negative electrode non-coating portions is processed into a plurality of independently bendable segments, and
at least a portion of the plurality of segments is bent toward a winding center of the electrode assembly.

11. The cylindrical lithium secondary battery of claim 10, wherein at least some of the plurality of bent segments overlap each other on upper and lower ends of the electrode assembly, and
the current collection plate is coupled to the plurality of overlapping segments.

12. The cylindrical lithium secondary battery of claim 1, wherein the cylindrical lithium secondary battery has a form factor ratio of 0.4 or more.

13. The cylindrical lithium secondary battery of claim 1, wherein the cylindrical lithium secondary battery is a 46110 cell, a 4875 cell, a 48110 cell, a 4880 cell, a 4680 cell, or a 4695 cell.

14. A battery pack comprising the cylindrical lithium secondary battery of any one of claims 1 to 13.
